# EUROPEAN PATENT SPECIFICATION

(11) **EP 3 954 930 B1**
(45) Date of publication and mention of the grant of the patent: **31.01.2024**
(21) Application number: 21186149.7
(22) Date of filing: 16.07.2021
(51) Int. Cl.: F16K 37/00, F16K 31/60, F16K 31/50, F16K 3/02, F16K 3/316, F16K 27/04

(54) **A GATE VALVE**
ABSPERRVENTIL
ROBINET-VANNE

(30) Priority: 14.08.2020 DK PA202070532
(43) Date of publication of application: 16.02.2022
(73) Proprietor: PL-Valves A/S, 5500 Middelfart (DK)
(72) Inventor: NIELSEN, Finn, 5550 Langeskov (DK)
(74) Representative: AWA Denmark A/S

(56) References cited:
- FR-A- 1 053 141
- NL-A- 7 203 287
- US-A- 5 836 570
- US-A1- 2009 121 173

## Description

The present invention relates to a gate valve according to the introductory part of claim 1.

Gate valves are typically used in applications where minimum flow restriction is desired in the fully open position of the valve. Due to their efficient design, gate valves are often used for larger diameter applications. The higher the fluid pressure acting on the gate valve, the higher the force required to move the gate valve between the open and closed position.

FR 1 053 141 A and NL 7 203 287 A disclose gate valves comprising a plate-shaped valve housing and a gate plate slideable within the valve housing, wherein the valve housing comprises a circumferential sealing groove and two opposed circumferential sealing members for sealing a flow opening, and wherein protrusions of a rigid material extend from two opposed surfaces of the sealing groove.

US 2009/121173 A1 discloses a knife gate valve including a reinforced valve seat which prevents displacement of the valve seat when the valve is opened and closed.

US 5 836 570 A discloses a gate valve according to the introductory part of claim 1 and a method according to the introductory part of claim 14.

It may be considered an object of the gate valves and methods of the present disclosure to improve upon fluid tightness, especially at higher fluid pressures, of gate valves. Other objects may also be reached with the gate valves and methods disclosed herein.

A first aspect of the invention concerns a gate valve according to the introduction, characterized by the characterizing features of claim 1.

A gate valve may be understood as a valve that opens by moving a barrier (gate) out of the path of the fluid. A gate valve may also be known as a sluice valve.

The plate-shaped valve housing may extend substantially in parallel with a flow opening plane. The valve housing may extend substantially perpendicularly to the first and second pipes. The first and second major surfaces of the valve housing may be substantially parallel. The valve housing may at least extend more than 1, 2, 3, 4, 5, 6, 7, 8, 9, 10, 15, or 20 sealing groove depths beyond the flow opening. There may at least be a distance of more than 1, 2, 3, 4, 5, 6, 7, 8, 9, 10, 15, or 20 sealing groove depths from the circumference of the flow opening, around the entire circumference of the flow opening, to a perimeter of the valve housing circumscribing the flow opening. There may at least be a distance of more than 0.1, 0.2, 0.3, 0.4, 0.5, 0.6, 0.7, 0.8, 0.9, or 1 flow opening radius from the circumference of the flow opening, around the entire circumference of the flow opening, to a perimeter of the valve housing. The distance may be measured in a radial direction from the flow opening. The valve housing may extend beyond the flow opening i.e. the valve housing may extend beyond the circumference of the flow opening. The flow opening may be positioned within a perimeter of the valve housing. The valve housing may comprise a housing base positioned at an opposite end of the valve housing than a housing head. The flow opening may be positioned near the housing base. A distance from the housing base to the housing head may be at least 1, 2, 3, 4, 5 or more flow opening diameters. The bonnet may be attached to the housing head. The bonnet may be attached via bolts, screws, rivets and/or combinations thereof. The bonnet may be detachably attached via bolts and/or screws. To attach or detach the bonnet, the bolts and/or screws may be screwed in or unscrewed respectively. The valve housing head and/or bonnet may comprise a sealing member for sealing between the valve housing head and the bonnet in the attached state of the bonnet. The bonnet may comprise an opening for a stem and/or pointer. The pointer may be attached to the gate plate. The pointer may be understood as a device providing a visual indication of the position of the gate valve. The pointer may be rod. The rod may comprise one or more markings for indicating the position of the gate plate. The valve housing may comprise two plate-shaped valve housing halves. Each valve housing half may comprise one of the two major surfaces of the valve housing. The valve housing halves may be attached to each other to form the valve housing. The valve housing halves may be attached to each other by bolts, screws, rivets, welding, adhesives, and/or combinations thereof. The valve housing may be extruded and/or cast and/or pressed and/or milled and/or injection moulded, or a combination thereof. One or more support members for supporting and/or stiffening the valve housing may be attached to the valve housing. The support members may be attached to one of the two major surfaces of the valve housing. The gate valve and/or the valve housing may be made of PE, HDPE, PUR, and/or combinations thereof. The gate valve and/or valve housing may be made of a salt water resistant material.

The flow opening may define a flow opening plane. The flow opening may be substantially circular. The flow opening may be defined by a circumferential surface. The circumferential surface may be located at a circumference of the flow opening. The circumferential surface may extend substantially in parallel with the first and second pipes. The circumferential surface may be substantially plane and/or flush with an inner surface of the first and/or second pipes. The flow opening may have a flow opening diameter.

The first and second pipes may be coaxial. The first and second pipes may be concentric. The first and second pipes may be substantially identical. The first and second pipes may extend in a flow direction. The first and second pipes may have an inner diameter of substantially the same diameter as a flow opening diameter. The first and second pipes may be welded to one of the two major surfaces of the valve housing. The first and second pipes may be extruded.

The gate plate may be a hand-pulled gate plate i.e. the gate plate may be slid between the closed and open position by being pulled or pushed by hand. A stem may be attached to the gate plate. The gate valve may be slid between the closed and open position by pulling or pushing the stem. The stem may be welded to the gate plate. The two major surfaces of the gate plate may be substantially parallel with the two major surfaces of the valve housing. The gate plate may be slidable in a direction that is substantially parallel with the two major surfaces of the valve housing.

The gate valve may comprise an actuator for moving the gate plate between the closed and open position. The actuator may be a handle which may be pulled or pushed. The handle may be connected to the gate plate via a stem. In this way the gate plate may be pulled and/or pushed between the open and/or closed position. The actuator may be a handwheel. By rotating the handwheel, the gate plate may be moved between the closed and open position. The stem may be a threaded stem or spindle. The threaded stem or spindle may be connected to the handwheel. The actuator may be connected to the gate plate via a stem. The threaded stem and or spindle may be a rising stem or spindle i.e. as the stem or spindle is actuated it may rise away from the valve housing, or a non-rising stem or spindle where the stem does not rise away from the valve housing as it is actuated. The actuator may be positioned above the housing head and/or bonnet. The valve housing and/or valve housing halves comprises comprise a stem guide slot for guiding the movement of the stem.

In the open position, the flow opening may be unimpeded by the gate plate. In the closed position the flow opening may be impeded by the gate plate. In the closed position, the entire flow opening may be impeded by the gate plate.

The gate plate abutting the protrusion, particularly when a fluid pressure acts on the gate plate, may prevent the gate plate from deforming. Preventing the gate plate from deforming may reduce the force of the gate plate on the sealing member when the gate plate is moved between the open and closed position. This may prevent the sealing member from being dragged or pushed out of the sealing groove. The gate plate may in this way be prevented from disadvantageous deformation which may catch on the sealing member.

The sealing groove may extend from the circumferential surface of the flow opening and circumferentially into the valve housing. The sealing groove circumscribes at least partially the flow opening. The sealing groove may extend into the valve housing radially from the flow opening. The sealing groove may be annular and/or circular. The two opposed surfaces of the sealing groove may extend radially from the flow opening. The two opposed surfaces may be substantially parallel. The two opposed surfaces may define inner surfaces of side walls of the sealing groove. The sealing groove may comprise an end surface. The end surface may be a surface of the sealing groove positioned furthest from the flow opening. The end surface may interconnect the two opposed surfaces of the sealing groove. The end surface may extend substantially in parallel with the circumferential surface of the flow opening. In the closed position, the gate plate may abut the end surface of the sealing groove. Each of the two opposed surfaces of the sealing groove may comprise a sealing member recess. The sealing member recesses may extend substantially in parallel with the first and second pipes and/or the circumferential surface of the flow opening. The sealing member recesses may extend substantially perpendicularly to the opposed surfaces of the sealing groove. The sealing groove may be machined into the valve housing. The sealing groove may be milled, reamed, cut and/or reamed into the valve housing. The sealing groove may be extruded. The sealing groove may have a groove opening at the flow opening. The sealing groove may have a groove depth extending from the groove opening and/or circumferential surface to the groove end surface. The groove depth may extend substantially in parallel with one of the major surfaces of the gate plate. The valve housing may extend at least 1, 2, 3, 4, 5, 6, 7, 8, 9, or 10 or more groove depths beyond the flow opening. The housing base may be distanced by at least 1, 2, 3, 4, 5, 6, 7, 8, 9, or 10 or more groove depths from the flow opening. The housing head or bonnet may be distanced by at least 1, 2, 3, 4, 5, 6, 7, 8, 9, 10, 11, 12, 13, 14, 15, 16, 17, 18, 19, 20, 21, 22, 23, 24, 25, 26, 27, 28, 29, or 30 or more groove depths from the flow opening.

The sealing members may be made of a natural or synthetic rubber e.g. EPDM (ethylene propylene diene monomer rubber), BIIR (bromo butyl), NBR (nitrile butadiene rubber), Silicone etc. The sealing members may be made of a salt water resistant material. The sealing members may be made of a salt water resistant natural or synthetic rubber. Each sealing member may extend into the sealing groove. The sealing members may extend farther from one of the two opposed surfaces into the sealing groove than the protrusion(s). Each circumferential sealing member may be secured in a sealing member recess. The sealing members may annular and/or circular. The sealing members may at least partially circumscribe the flow opening. Each sealing member may comprise a head portion for abutting the gate plate. Each sealing member may comprise a stem portion for attaching the sealing member to the sealing groove and/or sealing member recess. The head portion of each sealing member may comprise a cavity. The head portion of each sealing member may comprise an abutment surface for abutting the gate plate and/or one of the major surfaces of the gate plate. The cavity may facilitate compression of the head portion of the sealing members. The head of each sealing member may be cone-shaped.

The protrusion may be positioned at the groove opening of the sealing groove. The protrusion may be substantially flush with the circumferential surface of the flow opening. The protrusion may extend from the circumferential surface and into the sealing groove.

Another protrusion may extend from the other of the two opposed surfaces of the sealing groove. At least one protrusion may extend from each of the two opposed surfaces of the sealing groove. The two protrusions may be formed substantially similar or identical to each other and/or may extend towards each other. The further protrusion may be according to any one of the embodiments of the (first) protrusion described in the present disclosure.

The or each protrusion may include several protrusion parts which may be distanced from each other by a spacing or slot. At least 1, 2, 3, 4, 5, 6, 7, 8, 9 or 10 or more protrusions or protrusion parts may extend from one or each of the two opposed surfaces. The protrusions extending from the same one surface of the opposed surfaces may be positioned with a distance to each other and/or may be distributed in a circumferential direction. The protrusion(s) may form part of and/or be integral with and/or in one piece with the valve housing. The protrusion(s) may be attached to, such as welded to, the valve housing. The protrusion(s) may extend less than 1/10, 1/9, 1/8, 1/7, 1/6, 1/5, 1/4, 1/3, or 1/2 of a groove width extending from one of the two opposed surfaces of the sealing groove to the other of the two opposed surfaces of the sealing groove. The protrusion(s) may extend at least 1/10, 1/9, 1/8, 1/7, 1/6, 1/5, 1/4, 1/3, 1/2, 3/5, 2/3, 7/10, 4/5, or 9/10 of a distance that each of the two circumferential sealing members extend from one of the two opposed surfaces of the sealing groove towards the gate plate to abut an associated one of two major surfaces of the gate plate. The protrusion(s) may be provided separately of the sealing groove and/or the valve housing. The protrusion(s) may be welded or attached by an adhesive to the sealing groove. Alternatively, the protrusion(s) may be milled into the sealing groove and/or valve housing.

The protrusion(s) may be rectangular, square, trapezoidal, or any other suitable shape in a cross-section circumscribing the flow opening. A retainment face of the protrusion(s) facing a sealing member may be a substantially plane face. An abutment face of the protrusion(s) for facing and abutting the gate plate at least in the closed position may be a substantially plane face.

In an embodiment, when no fluid pressure acts on one of the major surfaces of the gate plate, there is a spacing gap between the gate plate and the protrusion.

The term "spacing gap" may be understood as a free volume i.e. a volume void of any gate valve components.

In an embodiment, when a fluid pressure acts on the gate plate, one of the two major surfaces of the gate plate abuts the protrusion.

The protrusion may guide the gate plate when the plate abuts the protrusion. The gate plate may slide against the protrusion when a fluid pressure acts on one of the two major surfaces of the gate plate. In this way the force required to move the gate plate between the open and closed position may be reduced as the gate plate is prevented from being pushed into the sealing member by the fluid pressure. The sealing member especially when compressed typically exhibits a high coefficient of friction. Thereby preventing the gate plate from compressing and sliding against the sealing member may reduce the friction force that has to be overcome to move the gate plate and thereby reduce the total force required to move the gate plate between the open and closed position.

In an embodiment, when a fluid pressure acts on the gate plate, the protrusion is positioned against one of the sealing members so that the protrusion retains the sealing member.

This may prevent the sealing member from being dragged out of the sealing groove and/or sealing member recess when the gate plate moves between the closed and the open positions, particularly from open to the closed position when a fluid pressure actions on the gate plate. When a fluid pressure acts on the gate plate, the force with which the gate plate is pushed against the sealing members are increased and may be particular high at the beginning of the opening movement of the gate plate from the closed position to towards the open position. Under these conditions, the sealing member may be particularly prone to be dragged out of the sealing groove and/or sealing member recess. The protrusion being positioned against the sealing member may prevent this as it may act as a barrier or support for the sealing member acting to keep it in place.

In an embodiment, a slot extends from the flow opening and through the protrusion and into the sealing groove.

The slot may extend from the circumferential surface of the flow opening. The slot may allow contaminants, debris, and/or grime to escape and/or be removed from the sealing groove. The gate plate may drag contaminants, debris, and/or grime out of the sealing groove through the slot when it moves from the closed to the open position. The slot may be milled and/or cut into the protrusion(s). The slot may extend less than 1/30, 1/25, 1/20, 1/15, 1/10, 1/9, 1/8, 1/7, 1/6, 1/5, 1/4, or 1/3 of the circumference of the flow opening.

In an embodiment, the protrusion is of a material with a Young's modulus of more than 0.1GPA.

The protrusions being of a material with a Young's of more than 0.1 may reduce the friction coefficient of the protrusion when the gate plate slides against it and thereby lower the total force required to move the gate plate between the open and closed position. Furthermore, it may prevent the protrusion from being compressed and deformed, when the gate plate abuts e.g. when a fluid acts on the gate plate, which compression and deformation may result in increased friction. The protrusion being prevented from being compressed and deformed may also prevent the sealing members from being compressed and deformed the compression and deformation of which may result in a higher friction coefficient between the gate plate and the sealing member. In this way the total force required to move the gate plate between the closed and open position may be reduced.

The protrusion may be of a material with a Young's modulus of more than 0.2, 0.3, 0.4, 0.5, 0.6, 0.7, 0.8, 0.9, 1.5, 2, 2.5, 3, 3.5, 4, 5, 6, 7, 8, 9, 10, 15, 20, 25, 30, 40, 50, 60, 70, 80, 90, or 100GPA. The protrusion may be made of the same material as the valve housing. The protrusion may be made of a metal.

In an embodiment, the protrusion has a height extending substantially in parallel with one of the major surfaces of gate plate when the gate plate is in the closed position, and a width extending substantially perpendicularly to one of the major surfaces of the gate plate, when the gate plate is in the closed position, wherein the protrusion has a width to height ratio of 1:1.

Additionally, or alternatively, the width of the protrusion may extend in parallel with the width of the sealing groove. Additionally, or alternatively, the height of the protrusion may extend in parallel with the depth of the sealing groove. Additionally, or alternatively, the width of the protrusion may extend substantially perpendicularly to at least one of the major surfaces of the valve housing. Additionally, or alternatively, the height may extend substantially in parallel with at least one of the major surfaces of the valve housing. The width of the protrusion may extend from the opposed surface of the sealing groove from which the protrusion extends to an abutment face of the protrusion for abutting the gate plate. The height of the protrusion may extend from the flow opening from which the protrusion extends to a retainment face for facing a sealing member. The retainment face may be positioned near the sealing member. The retainment face may abut the sealing member.

The width to height ratio of the protrusion may be at least 1:0.1, 1: 0.2, 1:0.3, 1:0.4, 1:0.5, 1:0.6, 1:0.7, 1:0.8, 1:0.9, 1:1.1, 1:1.2, 1:1.3, 1:1.4, 1:1.5, 1:1.6, 1:1.7, 1:1.8, 1:1.9, 1:2, 1:2.5, 1:3, 1:4, or 1:5.

The protrusion(s) may have a height of less than 1/2, 1/3, 1/4, 1/5, 1/6, 1/7, 1/8, 1/9, 1/10, 1/15, 1/20, or 1/25 of the sealing groove depth.

The protrusion(s) may have a width of less than 1/3, 1/4, 1/5, 1/6, 1/7, 1/8, 1/9, 1/10, 1/15, 1/20, or 1/25 of the sealing groove width.

In an embodiment, the two opposed surfaces of the sealing groove extend substantially in parallel with the two major surfaces of the valve housing.

In an embodiment, the sealing member(s), extend(s) about at least or substantially a bottom half of the flow opening, such as about half of the flow opening. In addition, or alternatively, the protrusion(s), extend(s) about at least or substantially a bottom half of the flow opening, such as about 2/3 of the flow opening. The remaining circumference of the flow opening, such as an upper half of the flow opening circumference, may thereby be open to upper parts of the valve housing. The sealing groove may extend about the entire circumference of the flow opening.

The valve housing comprises a top portion positioned above the flow opening. One or both valve housing halves comprise(s) at the top portion of the valve housing at least one or at least two support elements, such as one, two, three, four, five or six support elements, on one or both sides of the gate plate, for supporting the gate plate when a fluid pressure acts on one of the major surfaces of the gate plate. These support elements are provided as projections that project towards the opposed valve housing half. More support elements, such as four or six, on each side of the gate plate may be desired for larger gate valves, whereas e.g. two support elements on each side of the gate plate may be desired for smaller gate plates. In an example not being part of the claimed invention, the or each of said at least one support element may have a cylindrical, such as a circular-cylindrical, shape. The at least one support element may project from an interior surface of one or both halves of the valve housing towards the gate plate. According to the invention, one elongated support element extends along one lateral side or along both lateral sides of a stem guide slot of the associated valve housing half. One, more, or each support element may have an elongated shape in a direction extending away from the flow opening or upwardly to provide improved support of the gate plate. These or other support element(s) may be rectangular. It may be advantageous that the shape includes soft edges to avoid dirt or sludge being collected, see also further below. The support element(s) may be positioned substantially at or extending to the circumference of the flow opening. In case more than one support element is provided, the support elements may be positioned distributed along or extending to a top circumference of the flow opening. The support element(s) may include a substantially plane contact surface, especially at an end of the support element(s) positioned farthest away from the interior surface from which it/they project(s), i.e. a plane surface facing the opposed valve housing half. This/these contact surface/surfaces may abut or control the gate plate when a fluid pressure acts on one of the major surfaces of the gate plate and may assist in preventing deformation of the gate plate. This may thus complement the effect of the protrusion(s) circumscribing at least part of the flow opening. Compression of the sealing member(s) and friction between the gate plate and the sealing member(s) may also be controlled. The support element(s) may extend from the interior surface of the valve housing in approximately or substantially the same height in a direction towards the gate plate as the protrusion(s). The at least one support element may be provided by milling the support element in one or each of the two valve house parts.

Such support element(s) may be of particular advantage in embodiments as described above where the sealing member(s) and/or the protrusion(s) do not extend about a top portion of the flow opening, the support elements potentially replacing the support from the protrusion(s) parts left out at the upper half of the circumference of the flow opening. Dirt, sludge, and the like may in some uses of the gate valve, such as uses where the gate valve is positioned so that the flow opening is positioned non-vertically or even horizontally, accumulate in an upper portion of the valve housing above the flow opening, which may deter the proper functioning of the valve. An advantage of leaving out the sealing member(s) and/or protrusion(s) parts at a top portion of the circumference of the flow opening may be that such dirt can be flushed out from the upper portion of the valve housing when fluid flow is allowed through the valve, especially when the gate valve is partially open. In some cases, the gate plate will never be pulled completely away from the sealing member in the fully open position so that there will be no risk of the gate plate colliding with and thus potentially destroying the sealing member, nor of pulling out the sealing member from the sealing groove, in the fully open position. The primary area where there may a need of protecting the sealing member from destruction or being pulled out is typically when the valve is about 25 % open to fully closed.

A second aspect of the invention concerns a method according to claim 13.

The protrusion being positioned against the sealing member may ensure that the sealing member remains in its position and sealing of the flow opening. It may further prevent the sealing member from being dragged out of the sealing groove. The gate plate abutting the protrusion may reduce the force required to open the gate valve as the gate plate is not forced into and further deforms the sealing member which may increase the friction force that needs to be overcome when opening the gate valve. Further still, the protrusion may have a friction coefficient that is lower than the friction coefficient of the sealing member, which may reduce the friction force and thereby the opening force required even further. A further effect of the reduction of opening force required may be that the gate valve, particularly gate valves with hand-pulled gate plates, may be used for larger diameter flow openings with correspondingly larger gate plates, where opening forces required are typically too high for hand-pulling the gate plate open.

A person skilled in the art will appreciate that any one or more of the above aspects of this disclosure and embodiments thereof may be combined with any one or more of the other aspects and embodiments thereof.

In the following, non-limiting exemplary embodiments will be described in greater detail with reference to the drawings, in which:
Fig. 1 shows a perspective view of an embodiment of the gate valves of the present disclosure;
Fig. 2 shows a front view of the gate valve of Fig.1;
Fig. 3 shows a section view of the section C-C in Fig. 2;
Fig. 4 shows an enlarged view of the detail D in Fig. 3;
Fig. 5 shows the front view of the gate valve of Fig. 1 where the gate valve is partially open and a handwheel has been attached to the stem;
Fig. 6 shows a perspective view of a valve housing half of the gate valve in Fig. 1;
Fig. 7 shows an enlarged view of the detail A in Fig. 6;
Fig. 8 shows a front view of a variation of the valve housing half shown in Fig. 6, said variation not being part of the claimed invention; and
Fig. 9 shows a perspective view similar to the view of Fig. 6 of a variation according to the invention of the valve housing half shown in Fig. 8.

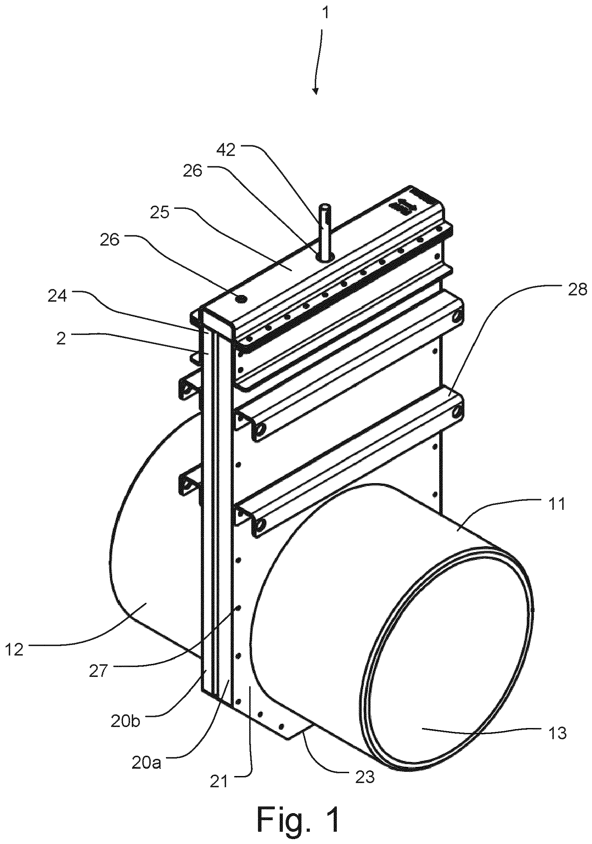

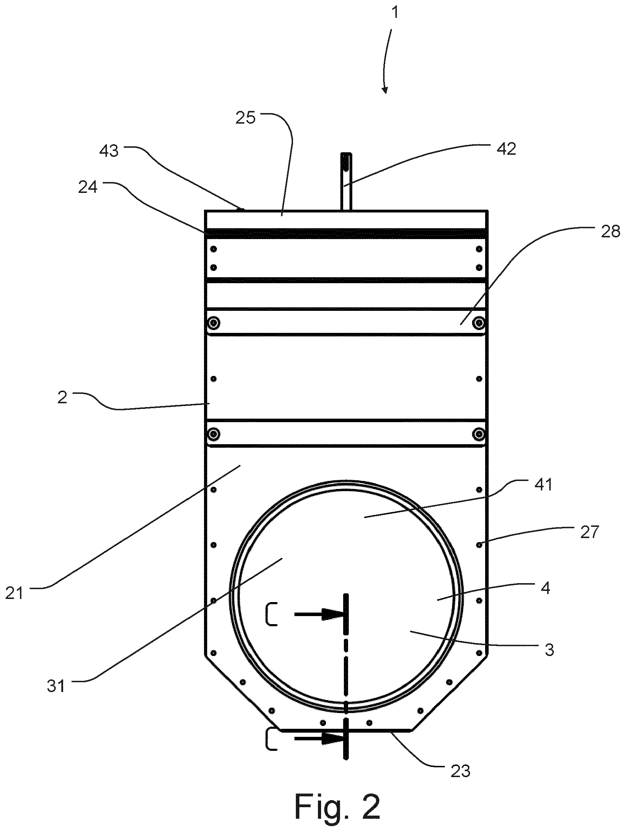

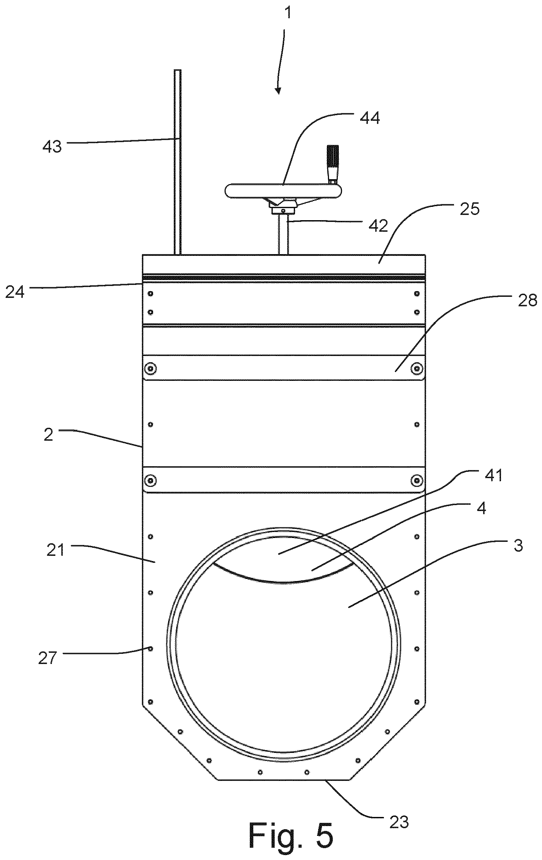

Starting with Fig. 1-5 a gate valve 1 for controlling a flow of a fluid according to the invention is shown. The gate valve 1 comprises:
a plate-shaped valve housing 2 circumscribing a flow opening 3 extending between two major surfaces 21, 22 of the valve housing 2;
a first pipe 11 connected to a first of the two major surfaces 21 to circumscribe the flow opening 3 at the first major surface 21 and a second pipe 12 connected to a second of the two major surfaces 22 to circumscribe the flow opening 3 at the second major surface 22; and
a gate plate 4 slidable within the valve housing 2 between a closed position, in which the gate plate 4 blocks the flow opening 3 as shown in Fig. 2, and an open position, which allows fluid flow through the flow opening 3 (Fig. 5 shows the gate valve 1 in a partially open position).

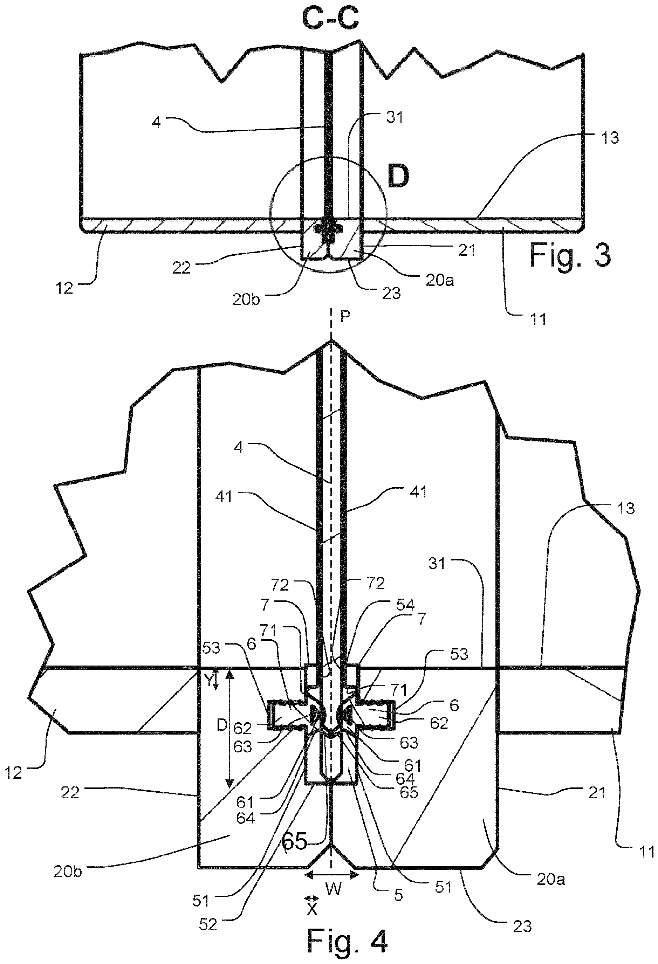

The valve housing 2 comprises a circumferential sealing groove 5, the sealing groove 5 circumscribing the flow opening 3 (see Figs 3 and 4). The sealing groove 5 comprising two opposed surfaces 51, two opposed circumferential sealing members 6 each extending from one of the two opposed surfaces 51 to abut an associated one of two major surfaces 41 of the gate plate 4 for sealing the flow opening 3 at least in the closed position. A protrusion 7 positioned closer to the flow opening 3 than the sealing members 6 extends from one of the two opposed surfaces 51 of the sealing groove 5 towards the other of the two opposed surfaces 51 of the sealing groove 5. The protrusion 7 is of a material more rigid than a sealing material of the sealing members 6, or, alternatively, when no fluid pressure acts on one of the major surfaces 41 of the gate plate 4, the protrusion 7 does not deform if the gate plate 4 abuts the protrusion 7. Another, similar and opposed, protrusion 7 also extends from the other of the two opposed surfaces 51 of the sealing groove 5. In the embodiment shown, the two protrusions 7 are otherwise identical.

The plate-shaped valve housing 2 is made of PE and extends substantially in parallel with a flow opening plane P defined by the flow opening 3 and extends substantially perpendicularly to the first and second pipes 11, 12. The first and second major surfaces 21, 22 are substantially parallel. The flow opening 3 is positioned within the perimeter of the valve housing. The valve housing 2 comprises a housing base 23 positioned at an opposite end of the valve housing 2 than a housing head 24. The flow opening 3 is positioned near the housing base 23. The distance from the housing base 23 to the housing head 24 is more than 2 flow opening diameters. A bonnet 25 is detachably attached to a supporting member 28 via bolts (not shown). To attach or detach the bonnet 25, the bolts are screwed in or unscrewed respectively. The valve housing head 24 and bonnet 25 comprise a sealing member (not shown) for sealing between the valve housing head 24 and the bonnet 25 in the attached state of the bonnet 25. The bonnet 25 comprises an opening 26 for a stem 42 and pointer 43 in the form of a rod. The pointer 43 is attached to the gate plate 4 and provides a visual indication of the position of the gate valve 4.

The valve housing 2 comprises two plate-shaped valve housing halves 20a, 20b, each comprising one of the two major surfaces 21, 22 of the valve housing 2. The valve housing halves 20a, 20b are attached to each other to form the valve housing 2. The valve housing halves 20a, 20b are cast in PE and subsequently milled and attached to each other via bolts 27. Alternatively, the housing halves, 20a, 20b may be welded to each other. Several support members 28 for supporting and stiffening the valve housing 2 are attached to the two major surfaces of the valve housing 2 via the same bolts 27. The gate valve 1 is made of a salt water resistant material.

As best seen in Figs. 2, 5 and 6, the flow opening 3 is substantially circular. The flow opening 3 is defined by a circumferential surface 31 located at a circumference of the flow opening 3. The circumferential surface 31 extends substantially in parallel with the first and second pipes 11, 12 and is substantially plane with an inner surface 13 of the first and second pipes 11, 12. The first and second pipes 11, 12 are substantially identical, coaxial, concentric and extend in a flow direction. The first and second pipes 11, 12 have an inner diameter of substantially the same diameter as the flow opening diameter. The first and second pipes 11, 12 are extruded in PE and welded to a respective one of the two major surfaces 21, 22 of the valve housing 2.

In Fig. 5 an actuator has been attached to the gate valve 1, i.e. the gate valve 1 comprises an actuator in the form of a handwheel 44 for moving the gate plate 4 between the closed and open position. The handwheel is attached to the stem 42, which is a threaded non-rising spindle that is attached to the gate plate 4. By rotating the handwheel 45, the gate plate 4 is moved between the closed and open position. As the gate plate 4 moves towards the open position, the pointer 43 that is attached to the gate plate 4 rises from the bonnet 25 through opening 26, thereby indicating the position of the gate plate 4, which may be particularly useful when the gate plate 4 is located in difficult to observe places. The stem 42 in this case is threaded into the gate plate 4. Alternatively, the stem 42 may be welded to the gate plate 4, or may be bolted to the gate plate 4 via a spindle nut. The valve housing 2, more specifically the valve housing halves 20a, 20b comprise a stem guide slot 29 for guiding the movement of the stem 42.

Alternatively, the actuator may be a handle (not shown) connected to the gate plate 4 via a stem, where the handle may be pulled or pushed, whereby the gate plate 4 may be pulled and/or pushed by hand between the open and/or closed position.

As may be seen in Figs. 3-5, the two major surfaces 41 of the gate plate 4 are substantially parallel with the two major surfaces 21, 22 of the valve housing 2. The gate plate 4 is slidable in a direction that is substantially parallel with the two major surfaces 21, 22 of the valve housing 2.

In the open position, the flow opening 3 is unimpeded by the gate plate 4, where as in the closed position, the entire flow opening 3 is impeded by the gate plate 4 as seen in Fig. 2.

The sealing groove 5 extends from the circumferential surface 31 of the flow opening 3 and circumferentially and radially into the valve housing 2 circumscribing the flow opening 3. The sealing groove 5 is annular and circular, with the two opposed surfaces 51 of the sealing groove 5 extending radially from the flow opening 3. The two opposed surfaces 51 are substantially parallel. The two opposed surfaces 51 define inner surfaces of side walls of the sealing groove 5. The sealing groove 5 comprises an end surface 52. The end surface 52 is a surface of the sealing groove 5 positioned farthest from the flow opening 3. The end surface 52 interconnects the two opposed surfaces 51 of the sealing groove 5. The end surface 52 extends substantially in parallel with the circumferential surface 31 of the flow opening 3. Each of the two opposed surfaces 51 of the sealing groove 5 comprise a sealing member recess 53. The sealing member recesses 53 extend substantially in parallel with the first and second pipes 11, 12 and the circumferential surface 31 of the flow opening 3. The sealing member recesses 53 extend substantially perpendicularly to the opposed surfaces 51 of the sealing groove 5. The sealing groove 5 is milled into the valve housing 2, more specifically into the valve housing halves 20a, 20b before they are assembled and attached to each other to form the valve housing 2. Alternatively, the sealing groove 5 may be extruded. The sealing groove 5 has a groove opening 54 at the flow opening 3. The sealing groove 5 has a groove depth D extending from the groove opening 54 and circumferential surface 31 to the groove end surface 52. The groove depth D extends substantially in parallel with the major surfaces 21, 22 of the gate plate 4.

The valve housing 2 extends more than 1 sealing groove depths D beyond the flow opening 3 as best seen in Fig. 3 and 4, and there is at least a distance of more than 1 sealing groove depths, and 0.2 flow opening radii from the circumference of the flow opening 3, around the entire circumference of the flow opening 3, to a perimeter of the valve housing 2 circumscribing the flow opening 3. Similarly, the housing base 23 is distanced by nearly 2 groove depths D from the flow opening 3. The distance from the circumference of the flow opening 3 to the perimeter of the valve housing 2 is here measured in a radial direction from the flow opening 3. The bonnet 25 is distanced by approximately 12 groove depths D from the flow opening 3.

The sealing members 6 are made of EPDM (ethylene propylene diene monomer rubber) and extend farther from the two opposed surfaces 51 into the sealing groove 5 than the protrusions 7. The gate plate 4 slides on the sealing members 6 when sliding between the open position and the closed position. The gate plate 4 may also slide on the protrusions 7, especially when being deformed, e.g. by a fluid pressure acting on the gate plate 4. Each circumferential sealing member 6 is secured in a sealing member recess 53. The sealing members 6 are annular and circular and extend circumferentially around the entire sealing groove 5 and sealing member recess 53. Each sealing member 6 comprises a cone-shaped head portion 61 for abutting the gate plate 4, and a stem portion 62 for attaching the sealing member 6 to the sealing member recess 53 as seen in Fig. 4. The head portion 61 of each sealing member 6 comprises a cavity 63 facilitating compression of the head portion 61, and an abutment surface 64 for abutting one of the major surfaces 41 of the gate plate 4. The head portion 61 of the sealing members 6 further comprises a lip seal 65 to keep contaminants away from the sealing member and gate plate 4 sealing interface.

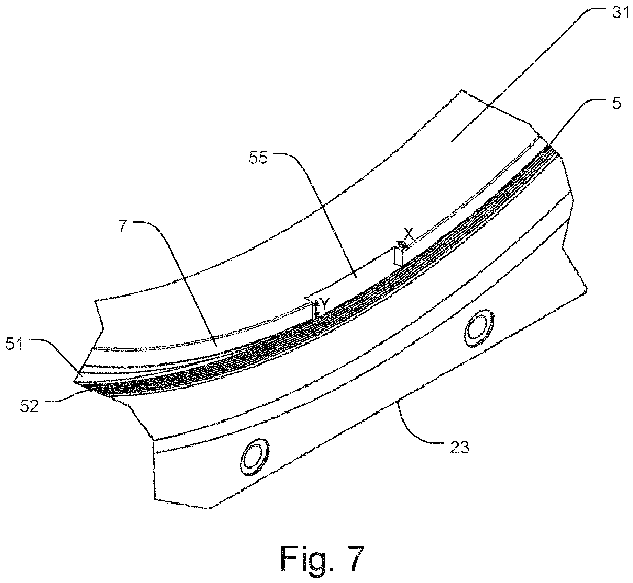

Referring particularly to Fig. 4 and Fig. 7, one protrusion 7 extends from each of the two opposed surfaces 51 of the sealing groove 5. The protrusions 7 are positioned at the groove opening 54 of the sealing groove 5 and are substantially flush with the circumferential surface 31 of the flow opening 3 (the section view in Fig. 4 may give the impression that the protrusions 7 are slightly raised despite being flush with the circumferential surface 31, see Fig. 7). The protrusions 7 are identical and extend from the circumferential surface 31 and into the sealing groove 5. The protrusions form part of and are integral and in one piece with the valve housing 2, more particularly the valve housing halves 20a, 20b. The protrusions 7 are formed in the valve housing halves 20a, 20b by milling. Alternatively, the protrusions 7 may be provided separately of the valve housing 2 and may be attached to the valve housing 2 e.g. by welding. The protrusions extend less than 1/3 of a groove width W extending from one of the two opposed surfaces 51 of the sealing groove 5 to the other of the two opposed surfaces 51 of the sealing groove 5. Similarly, the protrusions 7 extend at least 3/5 of a distance that each of the two circumferential sealing members 6 extend from the two opposed surfaces 51 of the sealing groove 5 towards the gate plate 4 to abut an associated one of two major surfaces 41 of the gate plate 4.

The protrusions 7 are rectangular in the cross-section circumscribing the flow opening 3 as seen in Fig. 4. A retainment face 71 of the protrusions 7 facing a sealing members 6 have a substantially plane face, and an abutment face 72 of the protrusions 7 for facing and abutting the gate plate 4 at least in the closed position has a substantially plane face.

When no fluid pressure acts on one of the major surfaces of the gate plate 4, there is a spacing gap (not shown) between the gate plate 4 and the protrusions 7. However, when a fluid pressure acts on the gate plate 4, one of the two major surfaces 41 of the gate plate 4 abuts one of the protrusions 7. The protrusions 7 guide the gate plate 4 when the plate 4 abuts a protrusion 7. The gate plate 4 slides against the protrusions when a fluid pressure acts on one of the two major surfaces 41 of the gate plate 4. In this way the force required to move the gate plate 4 between the open and closed position may be reduced as the gate plate 4 is prevented from being pushed into a sealing member 6 by the fluid pressure. The sealing members 6, especially when compressed, typically exhibit a high coefficient of friction. Preventing the gate plate 4 from compressing and sliding against a sealing member 6 may thereby reduce the friction force that has to be overcome to move the gate plate 4 and thereby reduce the total force required to move the gate plate 4 between the open and closed position.

When a fluid pressure acts on the gate plate 4, the protrusion is positioned against one of the sealing members 6 so that the protrusion retains the sealing member 6. Thereby helping to retain the sealing member 6.

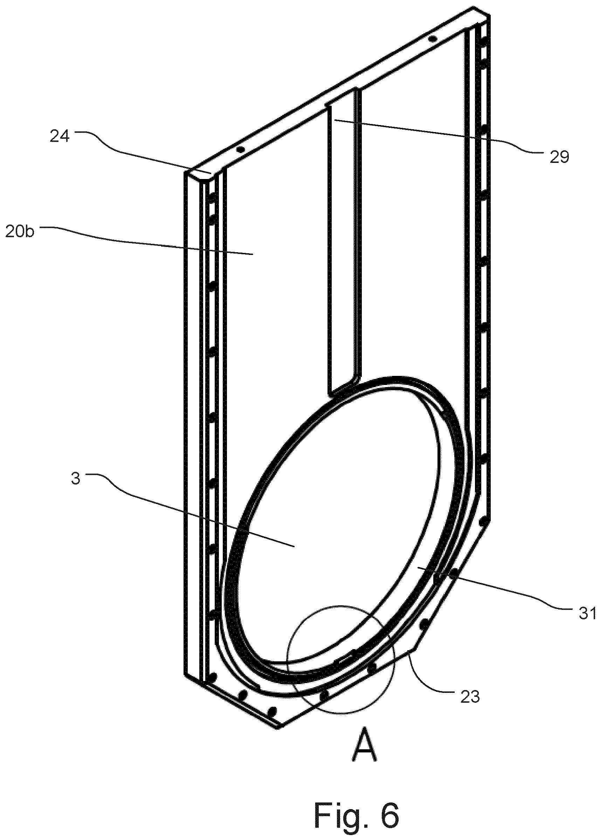

With particular reference to Fig. 6 and 7, it can be seen that a slot 55 extends from the flow opening 3, more specifically the circumferential surface 31, and through the protrusion 7 and into the sealing groove 5. The slot 55 is formed by an interruption of the protrusion 7. A similar slot (not shown) is provided in the opposed protrusion 7 in an identical position so that the two slots face each other. Aside from these two slots, the two protrusions 7 extend about the entire circumference of the flow opening 3. The slot 55 extends approximately 1/30 of the circumference of the flow opening 3, is milled into the protrusion 7, and may allow contaminants, debris, and/or grime to escape and be removed from the sealing groove 6. As the gate plate 4 moves from the closed to the open position it may drag contaminants, debris, and/or grime out of the sealing groove 6 through the slot 55. In other embodiments, no such slot 55 is provided.

The protrusions are made of PE with a Young's modulus of 0.8GPA. this may ensure that the protrusions 7 are not substantially compressed and/or deformed when the gate plate 4 abuts a protrusion 7 with a fluid pressure acting on the gate plate 4. The protrusions 7 have a height Y extending substantially in parallel with the major surfaces 21, 22 of the gate plate 4 in the closed position, and a width X extending substantially perpendicularly to one of the major surfaces of the gate plate, wherein the protrusion 7 have a width to height ratio of 1:2 as best seen in Fig. 4 and 7. The width of the protrusions 7 extends from the opposed surface 51 of the sealing groove 5 from which the protrusion 7 extends, to an abutment face 72 of the protrusion 7 for abutting the gate plate 4. The height of the protrusion 7 extends from the flow opening 3 from which the protrusion 7 extends to a retainment face 71 for facing a sealing member 6. The protrusions 7 have a height Y of less than 1/5 groove depth D and a width X of less than 1/4 of the sealing width W.

The width X of the protrusions 7 extend in parallel with the width of the sealing groove 5 substantially perpendicularly to at least one of the major surfaces 21, 22 of the valve housing 2. The height Y of the protrusions 7 extend in parallel with the groove depth D of the sealing groove 5 and substantially in parallel with at least one of the major surfaces 21, 22 of the valve housing 2. The two opposed surfaces 51 of the sealing groove 5 extend in parallel with the two major surfaces 21, 22 of the valve housing 2. The sealing groove 6 extends around the entire circumference of the flow opening 3. In operation when sliding the gate plate 4 towards the open position when a fluid pressure acts on one of the two major surfaces 41 of the gate plate 4, the other of the two major surfaces 41 of the gate plate 4 abuts a protrusion 7, and the protrusion 7 is positioned against one of the sealing members 6. As described in the above, the gate plate 4 sliding against a protrusion 7 when a fluid pressure acts on the gate plate 4 may reduce the force required to move the gate plate 4 between the open and closed position. As also described in the above, it may further prevent sealing members 6 from being dragged out of the sealing groove 5 as they are not subjected to as high a force as they otherwise would be as the protrusion(s) may take up at least a part of the force. Furthermore, a protrusion being positioned against a sealing member 6 may further prevent sealing member 6 from being dragged out of the sealing groove.

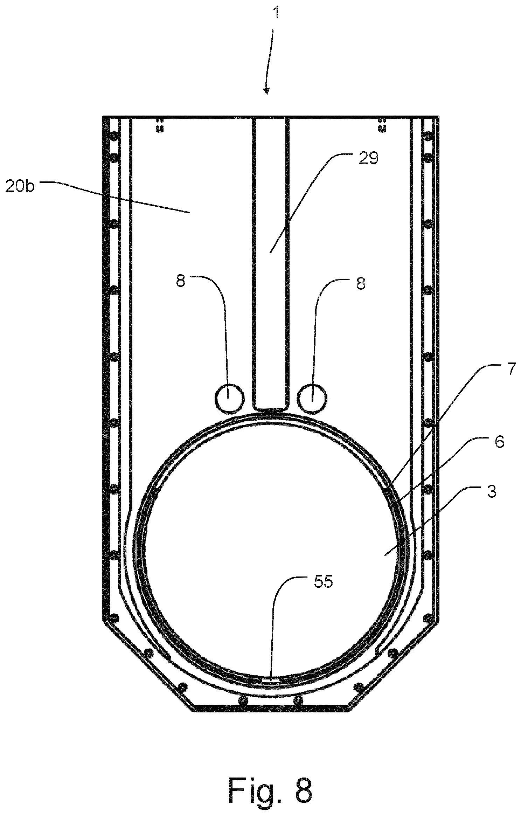

Fig. 8 shows a variation of the valve housing half 20b of Fig. 6 seen in a front view from the inside, said variation not being part of the claimed invention, i.e. Fig. 8 shows the side of the valve housing half 20b which faces the valve housing half 20a in the assembled gate valve. This embodiment is similar to the embodiment of Fig. 6 except for the differences described in the following.

Thus, in the embodiment of Fig. 8, the sealing member 6 only extends about substantially a bottom half of the flow opening 3. If the flow opening 3 is seen as a clock with the top point being at 12 o'clock, the sealing member 6 thus extends from three o'clock to 9 o'clock. The protrusions 7 extend from about 2 o'clock to about 10 o'clock, i.e. about 2/3 of the flow opening 3 circumference.

Furthermore, a top portion of each of the two valve housing halves 20a, 20b of the valve housing 2 comprises two circular-cylindrical inwardly projecting support elements 8 for supporting the gate plate 4 when a fluid pressure acts on one of the major surfaces 41 of the gate plate 4. Two not shown identical, oppositely facing support elements 8 are provided as part of the other valve housing half. Each pair of two support elements 8 projects from an interior surface of the associated valve housing half 20a, 20b towards the gate plate 4, i.e. towards the other valve housing part 20b, 20a. The support elements 8 are positioned substantially at the circumference of the flow opening 3, distributed along a top circumference portion of the flow opening 3. The support elements 8 each includes a substantially plane contact surface at an end of the support elements 8 positioned farthest away from the interior surface from which they project. This contact surface faces, abuts, and controls the gate plate 4 when a fluid pressure acts on one of the major surfaces 41 of the gate plate 4 and assists in preventing deformation of the gate plate 4. The support elements 8 extend from the interior surface of the valve housing halves 20a, 20b in approximately or substantially the same height in a direction towards the gate plate 4 as the protrusions 7. The support elements 8 are provided by milling the support elements 8 in the associated valve house halves 20a, 20b.

As seen in Fig. 8, the protrusions 7 extend from 2 o'clock to 10 o'clock, i.e. 2/3, about the flow opening which leaves a slot 73 opposed to the slot 55. This slot 73 and the left out top portion of the sealing member 6 contribute to the above described effects involving flushing of the top portion of the valve housing 2.

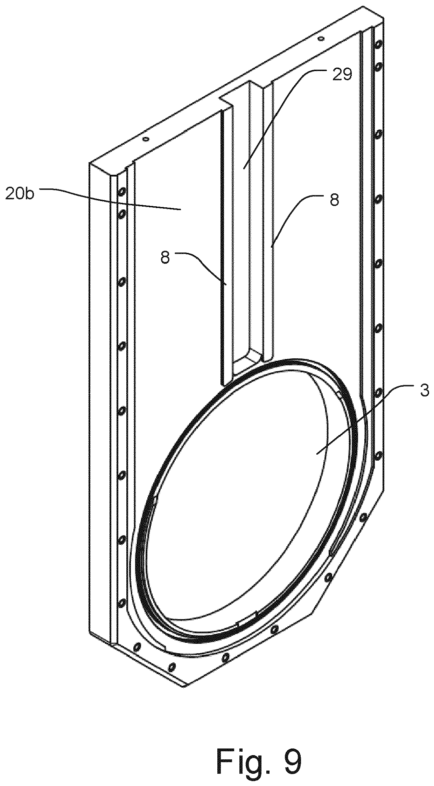

Fig. 9 shows a variation according to the invention of the valve housing half shown in Fig. 8. This embodiment is similar to the embodiment of Fig. 8 except for the differences described in the following, which differences involve only the shape of the support elements 8.

Thus, in the embodiment of Fig. 9, one support element 8 is elongated and extends along both lateral sides of the stem guide slot 29 of the associated valve housing half 20a, 20b. These support elements have an elongated shape in a direction extending away from the flow opening 3 or upwardly to an upper edge of the valve housing half 20b to provide improved support of the gate plate 4. These support elements 8 are substantially rectangular and extend to an upper circumference of the flow opening 3. Besides these differences in shape, the support elements 8 of Fig. 9 are identical to the support elements 8 shown in Fig. 8.

### List of Reference Numerals

- 1: Gate valve
- 11: First pipe
- 12: Second pipe
- 13: inner surface of pipes
- 2: Valve housing
- 20a, 20b: Valve housing halves
- 21: First major surface
- 22: Second major surface
- 23: Housing base
- 24: Housing head
- 25: Bonnet
- 26: Opening
- 27: Bolts
- 28: Support member
- 29: Stem guide slot
- 3: Flow opening
- 31: Circumferential surface
- P: Flow opening plane
- 4: Gate plate
- 41: Major surface
- 42: Stem/spindle
- 43: Pointer
- 44: Handwheel
- 5: Sealing groove
- 51: Opposed surface
- 52: End surface
- 53: Sealing member recess
- 54: Groove opening
- 55: Slot
- 6: Circumferential sealing member
- 61: Head portion
- 62: Stem portion
- 63: Cavity
- 64: Abutment surface
- 7: Protrusion
- 71: Retainment face
- 72: Abutment face
- 73: Slot
- X: Protrusion width
- Y: Protrusion height
- 8: Support element

## Claims

1. A gate valve (1) for controlling a flow of a fluid, the gate valve (1) comprising:
a plate-shaped valve housing (2) comprising two plate-shaped valve housing halves (20a, 20b) , the valve housing (2) circumscribing a flow opening (3) extending between two major surfaces (21, 22) of the valve housing (2);
a first pipe (11) connected to a first of the two major surfaces (21, 22) to circumscribe the flow opening (3) at the first major surface and a second pipe (12) connected to a second of the two major surfaces (21, 22) to circumscribe the flow opening (3) at the second major surface; and
a gate plate (4) slideable within the valve housing (2) between a closed position, in which the gate plate (4) blocks the flow opening (3), and an open position, which allows fluid flow through the flow opening (3);
wherein the valve housing (2) comprises a circumferential sealing groove (5), the sealing groove (5) at least partially circumscribing the flow opening (3), the gate plate (4) sliding in the sealing groove (5) when sliding between the open position and the closed position, the sealing groove (5) comprising two opposed surfaces (51), two opposed circumferential sealing members (6) each extending from one of the two opposed surfaces (51) to abut an associated one of two major surfaces (41) of the gate plate (4) for sealing the flow opening (3) at least in the closed position; and
wherein a protrusion (7) extends from one of the two opposed surfaces (51) of the sealing groove (5) towards the other of the two opposed surfaces (51) of the sealing groove (5);
wherein the protrusion (7) is of a material more rigid than a sealing material of the sealing members (6), or, alternatively, when no fluid pressure acts on one of the major surfaces (41) of the gate plate (4), the protrusion (7) does substantially not deform if the gate plate (4) abuts the protrusion (7);
wherein at least one of the valve housing halves (20a, 20b) at a top portion of the valve housing (2) positioned above the flow opening (3) comprises at least one support element (8) on one or both sides of the gate plate (4) for supporting the gate plate (4) when a fluid pressure acts on one of the two major surfaces (41) of the gate plate (4), wherein the support element/support elements (8) is/are provided as projections that project towards the opposed valve housing half (20a, 20b),
the gate valve being **characterized in that**
the protrusion (7) is positioned closer to the flow opening (3) than the sealing members (6); and **in that**
at least one of the at least one support element (8) is elongated and extends along one lateral side or along both lateral sides of a stem guide slot (29) of the associated valve housing half (20a, 20b).

2. A gate valve (1) according to claim 1, wherein, when no fluid pressure acts on one of the major surfaces (41) of the gate plate (4), there is a spacing gap between the gate plate (4) and the protrusion (7).

3. A gate valve (1) according to claim 1 or 2, wherein, when a fluid pressure acts on the gate plate (4), one of the two major surfaces (41) of the gate plate (4) abuts the protrusion (7).

4. A gate valve (1) according to any one of the preceding claims, wherein, when a fluid pressure acts on the gate plate (4), the protrusion (7) is positioned against one of the sealing members (6) so that the protrusion (7) retains the sealing member (6).

5. A gate valve (1) according to any one of the preceding claims, wherein a slot (55) extends from the flow opening (3) and through the protrusion (7) and into the sealing groove (5).

6. A gate valve (1) according to any one of the preceding claims, wherein the protrusion (7) is of a material with a Young's modulus of more than 0.1 GPA.

7. A gate valve (1) according to any one of the preceding claims, wherein the protrusion (7) has a height extending substantially in parallel with one of the major surfaces (41) of the gate plate (4) when the gate plate (4) is in the closed position, and a width extending substantially perpendicularly to one of the major surfaces (41) of the gate plate (4) when the gate plate (4) is in the closed position, wherein the protrusion (7) has a width to height ratio of 1:0.5-1.5.

8. A gate valve (1) according to any one of the preceding claims, wherein the two opposed surfaces (51) of the sealing groove (5) extend substantially in parallel with the two major surfaces (21, 22) of the valve housing (2).

9. A gate valve (1) according to any one of the preceding claims, wherein the sealing members (6) and/or protrusion(s) (7) extend(s) about substantially or at least a bottom half of the flow opening (3).

10. A gate valve (1) according to any one of the preceding claims, wherein at least one of said at least one support element (8) is provided on each side of the gate plate (4).

11. A gate valve (1) according to any one of the preceding claims, wherein at least two of said at least one support element (8) are provided on each side of the gate plate (4).

12. A gate valve (1) according to any one of the preceding claims,
wherein the at least one support element (8) is provided by milling the support element (8) in one or each of the two valve house parts (20a, 20b).

13. A method for controlling a flow of fluid through a gate valve (1), the gate valve (1) comprising:
a plate-shaped valve housing (2) comprising two plate-shaped valve housing halves (20a, 20b), the valve housing (2) circumscribing a flow opening (3) extending between two major surfaces (21, 22) of the valve housing (2);
a first pipe (11) connected to a first of the two major surfaces (21, 22) to circumscribe the flow opening (3) at the first major surface and a second pipe (12) connected to a second of the two major surfaces (21, 22) to circumscribe the flow opening (3) at the second major surface; and
a gate plate (4) slideable within the valve housing (2) between a closed position, in which the gate plate (4) blocks the flow opening (3), and an open position, which allows fluid flow through the flow opening (3);
wherein the valve housing (2) comprises a circumferential sealing groove (5), the sealing groove (5) at least partially circumscribing the flow opening (3), the gate plate (4) sliding in the sealing groove (5) when sliding between the open position and the closed position, the sealing groove (5) comprising two opposed surfaces (51), two opposed circumferential sealing members (6) each extending from one of the two opposed surfaces (51) to abut an associated one of two major surfaces (41) of the gate plate (4) for sealing the flow opening (3) at least in the closed position; and
wherein a protrusion (7) extends from one of the two opposed surfaces (51) of the sealing groove (5) towards the other of the two opposed surfaces (51) of the sealing groove (5);
wherein the protrusion (7) is of a material more rigid than a sealing material of the sealing members (6), or, alternatively, when no fluid pressure acts on one of the major surfaces (41) of the gate plate (4), the protrusion (7) does not deform if the gate plate (4) abuts the protrusion (7); and
wherein
the protrusion (7) is positioned closer to the flow opening than the sealing members (6); and
at least one of the valve housing halves (20a, 20b) at a top portion of the valve housing (2) positioned above the flow opening (3) comprises at least one support element (8) on one or both sides of the gate plate (4) for supporting the gate plate (4) when a fluid pressure acts on one of the two major surfaces (41) of the gate plate (4), wherein the support element/support elements (8) is/are provided as projections that project towards the opposed valve housing half (20a, 20b), wherein at least one of the at least one support element (8) is elongated and extends along one lateral side or along both lateral sides of a stem guide slot (29) of the associated valve housing half (20a, 20b),
wherein the method comprises the step of providing fluid through the gate valve such that when sliding the gate plate (4) towards the open position when a fluid pressure acts on one of the two major surfaces (41) of the gate plate (4), the other of the two major surfaces (41) of the gate plate (4) abuts the protrusion (7) and the protrusion (7) is positioned against one of the sealing members (6).

## Patentansprüche

1. Absperrventil (1) zum Steuern eines Fluidflusses, wobei das Absperrventil (1) Folgendes umfasst:
ein plattenförmiges Ventilgehäuse (2), das zwei plattenförmige Ventilgehäusehälften (20a, 20b) umfasst, wobei das Ventilgehäuse (2) eine Durchflussöffnung (3) umschließt, die sich zwischen zwei Hauptflächen (21, 22) des Ventilgehäuses (2) erstreckt;
ein erstes Rohr (11), das mit einer ersten der zwei Hauptflächen (21, 22) verbunden ist, um die Durchflussöffnung (3) an der ersten Hauptfläche zu umschließen, und ein zweites Rohr (12), das mit einer zweiten der zwei Hauptflächen (21, 22) verbunden ist, um die Durchflussöffnung (3) an der zweiten Hauptfläche zu umschließen; und
eine Absperrplatte (4), die innerhalb des Ventilgehäuses (2) zwischen einer geschlossenen Stellung, in der die Absperrplatte (4) die Durchflussöffnung (3) sperrt, und einer geöffneten Stellung, die einen Fluidfluss durch die Durchflussöffnung (3) ermöglicht, verschiebbar ist;
wobei das Ventilgehäuse (2) eine umlaufende Dichtungsnut (5) umfasst, wobei die Dichtungsnut (5) mindestens teilweise die Durchflussöffnung (3) umschließt und die Absperrplatte (4) in der Dichtungsnut (5) gleitet, wenn sie zwischen der geöffneten Stellung und der geschlossenen Stellung gleitet, wobei die Dichtungsnut (5) zwei gegenüberliegende Flächen (51), zwei gegenüberliegende umlaufende Dichtungselemente (6) umfasst, die sich jeweils von einer der beiden gegenüberliegenden Flächen (51) erstrecken, um an eine zugeordnete von zwei Hauptflächen (41) der Absperrplatte (4) anzulegen, um die Durchflussöffnung (3) mindestens in der geschlossenen Stellung abzudichten; und
wobei sich ein Vorsprung (7) von einer der zwei gegenüberliegenden Flächen (51) der Dichtungsnut (5) in Richtung der anderen der zwei gegenüberliegenden Flächen (51) der Dichtungsnut (5) erstreckt;
wobei der Vorsprung (7) aus einem Material besteht, das steifer als ein Dichtungsmaterial der Dichtungselemente (6) ist, oder alternativ, wenn kein Fluiddruck auf eine der Hauptflächen (41) der Absperrplatte (4) wirkt, sich der Vorsprung (7) im Wesentlichen nicht verformt, wenn die Absperrplatte (4) an dem Vorsprung (7) anliegt;
wobei mindestens eine der Ventilgehäusehälften (20a, 20b) an einem oberhalb der Durchflussöffnung (3) angeordneten oberen Abschnitt des Ventilgehäuses (2) mindestens ein Stützelement (8) auf einer oder beiden Seiten der Absperrplatte (4) umfasst, um die Absperrplatte (4) zu stützen, wenn ein Fluiddruck auf eine der zwei Hauptflächen (41) der Absperrplatte (4) wirkt, wobei das Stützelement/die Stützelemente (8) als Vorsprünge vorgesehen ist/sind, die in Richtung der gegenüberliegenden Ventilgehäusehälfte (20a, 20b) vorstehen, wobei das Absperrventil **dadurch gekennzeichnet ist, dass** der Vorsprung (7) näher an der Durchflussöffnung (3) als die Dichtungselemente (6) angeordnet ist; und dass mindestens eines der mindestens einen Stützelemente (8) langgestreckt ist und sich entlang einer seitlichen Seite oder entlang beider seitlichen Seiten eines Schaftführungsschlitzes (29) der zugeordneten Ventilgehäusehälfte (20a, 20b) erstreckt.

2. Absperrventil (1) gemäß Anspruch 1, wobei, wenn kein Fluiddruck auf eine der Hauptflächen (41) der Absperrplatte (4) wirkt, ein Abstandsspalt zwischen der Absperrplatte (4) und dem Vorsprung (7) vorhanden ist.

3. Absperrventil (1) gemäß Anspruch 1 oder 2, wobei, wenn ein Fluiddruck auf die Absperrplatte (4) wirkt, eine der zwei Hauptflächen (41) der Absperrplatte (4) an dem Vorsprung (7) anliegt.

4. Absperrventil (1) gemäß einem der vorhergehenden Ansprüche, wobei, wenn ein Fluiddruck auf die Absperrplatte (4) wirkt, der Vorsprung (7) so gegen eines der Dichtungselemente (6) angeordnet ist, dass der Vorsprung (7) das Dichtungselement (6) zurückhält.

5. Absperrventil (1) gemäß einem der vorhergehenden Ansprüche, wobei sich ein Schlitz (55) von der Durchflussöffnung (3) durch den Vorsprung (7) hindurch in die Dichtungsnut (5) erstreckt.

6. Absperrventil (1) gemäß einem der vorhergehenden Ansprüche, wobei der Vorsprung (7) aus einem Material mit einem Elastizitätsmodul von mehr als 0,1 GPa besteht.

7. Absperrventil (1) gemäß einem der vorhergehenden Ansprüche, wobei der Vorsprung (7) eine Höhe, die sich im Wesentlichen parallel zu einer der Hauptflächen (41) der Absperrplatte (4) erstreckt, wenn die Absperrplatte (4) in der geschlossenen Stellung ist, und eine Breite aufweist, die sich im Wesentlichen rechtwinklig zu einer der Hauptflächen (41) der Absperrplatte (4) erstreckt, wenn die Absperrplatte (4) in der geschlossenen Stellung ist, wobei der Vorsprung (7) ein Verhältnis von Breite zu Höhe von 1:0,5-1,5 aufweist.

8. Absperrventil (1) gemäß einem der vorhergehenden Ansprüche, wobei die zwei gegenüberliegenden Flächen (51) der Dichtungsnut (5) im Wesentlichen parallel zu den zwei Hauptflächen (21, 22) des Ventilgehäuses (2) verlaufen.

9. Absperrventil (1) gemäß einem der vorhergehenden Ansprüche, wobei sich die Dichtungselemente (6) und/oder der/die Vorsprung/Vorsprünge (7) im Wesentlichen oder mindestens über eine untere Hälfte der Durchflussöffnung (3) erstrecken.

10. Absperrventil (1) gemäß einem der vorhergehenden Ansprüche, wobei mindestens eines des mindestens einen Stützelements (8) auf jeder Seite der Absperrplatte (4) vorgesehen ist.

11. Absperrventil (1) gemäß einem der vorhergehenden Ansprüche, wobei mindestens zwei des mindestens einen Stützelements (8) auf jeder Seite der Absperrplatte (4) vorgesehen sind.

12. Absperrventil (1) gemäß einem der vorhergehenden Ansprüche, wobei das mindestens eine Stützelement (8) durch Fräsen des Stützelements (8) in einem oder jedem der zwei Ventilgehäuseteile (20a, 20b) vorgesehen ist.

13. Verfahren zum Steuern eines Fluidflusses durch ein Absperrventil (1), wobei das Absperrventil (1) Folgendes umfasst:
ein plattenförmiges Ventilgehäuse (2), das zwei plattenförmige Ventilgehäusehälften (20a, 20b) umfasst, wobei das Ventilgehäuse (2) eine Durchflussöffnung (3) umschließt, die sich zwischen zwei Hauptflächen (21, 22) des Ventilgehäuses (2) erstreckt;
ein erstes Rohr (11), das mit einer ersten der zwei Hauptflächen (21, 22) verbunden ist, um die Durchflussöffnung (3) an der ersten Hauptfläche zu umschließen, und ein zweites Rohr (12), das mit einer zweiten der zwei Hauptflächen (21, 22) verbunden ist, um die Durchflussöffnung (3) an der zweiten Hauptfläche zu umschließen; und
eine Absperrplatte (4), die innerhalb des Ventilgehäuses (2) zwischen einer geschlossenen Stellung, in der die Absperrplatte (4) die Durchflussöffnung (3) sperrt, und einer geöffneten Stellung, die einen Fluidfluss durch die Durchflussöffnung (3) ermöglicht, verschiebbar ist;
wobei das Ventilgehäuse (2) eine umlaufende Dichtungsnut (5) umfasst, wobei die Dichtungsnut (5) mindestens teilweise die Durchflussöffnung (3) umschließt und die Absperrplatte (4) in der Dichtungsnut (5) gleitet, wenn sie zwischen der geöffneten Stellung und der geschlossenen Stellung gleitet, wobei die Dichtungsnut (5) zwei gegenüberliegende Flächen (51), zwei gegenüberliegende umlaufende Dichtungselemente (6) umfasst, die sich jeweils von einer der beiden gegenüberliegenden Flächen (51) erstrecken, um an eine zugeordnete von zwei Hauptflächen (41) der Absperrplatte (4) anzulegen, um die Durchflussöffnung (3) mindestens in der geschlossenen Stellung abzudichten; und
wobei sich ein Vorsprung (7) von einer der zwei gegenüberliegenden Flächen (51) der Dichtungsnut (5) in Richtung der anderen der zwei gegenüberliegenden Flächen (51) der Dichtungsnut (5) erstreckt;
wobei der Vorsprung (7) aus einem Material besteht, das steifer als ein Dichtungsmaterial der Dichtungselemente (6) ist, oder alternativ, wenn kein Fluiddruck auf eine der Hauptflächen (41) der Absperrplatte (4) wirkt, sich der Vorsprung (7) nicht verformt, wenn die Absperrplatte (4) an dem Vorsprung (7) anliegt;
wobei der Vorsprung (7) näher an der Durchflussöffnung als die Dichtungselemente (6) angeordnet ist; und
mindestens eine der Ventilgehäusehälften (20a, 20b) an einem oberhalb der Durchflussöffnung (3) angeordneten oberen Abschnitt des Ventilgehäuses (2) mindestens ein Stützelement (8) auf einer oder beiden Seiten der Absperrplatte (4) umfasst, um die Absperrplatte (4) zu stützen, wenn ein Fluiddruck auf eine der zwei Hauptflächen (41) der Absperrplatte (4) wirkt, wobei das Stützelement/die Stützelemente (8) als Vorsprünge vorgesehen ist/sind, die in Richtung der gegenüberliegenden Ventilgehäusehälfte (20a, 20b) vorstehen, wobei mindestens eines des mindestens einen Stützelements (8) langgestreckt ist und sich entlang einer seitlichen Seite oder entlang beider seitlichen Seiten eines Schaftführungsschlitzes (29) der zugeordneten Ventilgehäusehälfte (20a, 20b) erstreckt,
wobei das Verfahren den Schritt des Bereitstellens von Fluid durch das Absperrventil umfasst, sodass beim Verschieben der Absperrplatte (4) in Richtung der geöffneten Stellung, wenn ein Fluiddruck auf eine der zwei Hauptflächen (41) der Absperrplatte (4) wirkt, die andere der zwei Hauptflächen (41) der Absperrplatte (4) an dem Vorsprung (7) anliegt und der Vorsprung (7) gegen eines der Dichtungselemente (6) angeordnet ist.

## Revendications

1. Vanne à opercule (1) pour commander un débit d'un fluide, la vanne à opercule (1) comprenant :
un logement de vanne en forme de plaque (2) comprenant deux moitiés de logement de vanne en forme de plaque (20a, 20b), le logement de vanne (2) circonscrivant une ouverture de débit (3) s'étendant entre deux surfaces majeures (21, 22) du logement de vanne (2) ;
un premier tuyau (11) raccordé à une première des deux surfaces majeures (21, 22) pour circonscrire l'ouverture de débit (3) sur la première surface majeure et un second tuyau (12) raccordé à une seconde des deux surfaces majeures (21, 22) pour circonscrire l'ouverture de débit (3) sur la seconde surface majeure ; et
une plaque d'opercule (4) pouvant coulisser à l'intérieur du logement de vanne (2) entre une position fermée, dans laquelle la plaque d'opercule (4) bloque l'ouverture de débit (3), et une position ouverte, qui permet un débit de fluide à travers l'ouverture de débit (3) ;
dans laquelle le logement de vanne (2) comprend une rainure d'étanchéité circonférentielle (5), la rainure d'étanchéité (5) circonscrivant au moins partiellement l'ouverture de débit (3), la plaque d'opercule (4) coulissant dans la rainure d'étanchéité (5) lorsqu'elle coulisse entre la position ouverte et la position fermée, la rainure d'étanchéité (5) comprenant deux surfaces opposées (51), deux organes d'étanchéité circonférentiels opposés (6) chacun s'étendant depuis une des deux surfaces opposées (51) pour être contigu à une associée de deux surfaces majeures (41) de la plaque d'opercule (4) pour étanchéifier l'ouverture de débit (3) au moins dans la position fermée ; et
dans laquelle une partie saillante (7) s'étend depuis une des deux surfaces opposées (51) de la rainure d'étanchéité (5) vers l'autre des deux surfaces opposées (51) de la rainure d'étanchéité (5) ;
dans laquelle la partie saillante (7) est d'un matériau plus rigide qu'un matériau d'étanchéité des organes d'étanchéité (6), ou, en variante, lorsqu'aucune pression de fluide n'agit sur une des surfaces majeures (41) de la plaque d'opercule (4), la partie saillante (7) ne se déforme sensiblement pas si la plaque d'opercule (4) est contiguë à la partie saillante (7) ;
dans laquelle au moins une des moitiés de logement de vanne (20a, 20b) dans une portion supérieure du logement de vanne (2) positionnée au-dessus de l'ouverture de débit (3) comprend au moins un élément de support (8) sur un ou les deux côtés de la plaque d'opercule (4) pour supporter la plaque d'opercule (4) lorsqu'une pression de fluide agit sur une des deux surfaces majeures (41) de la plaque d'opercule (4), dans laquelle l'élément de support/les éléments de support (8) est/sont prévu(s) sous forme de saillies qui font saillie vers la moitié de logement de vanne opposée (20a, 20b), la vanne à opercule étant **caractérisée en ce que** la partie saillante (7) est positionnée plus près de l'ouverture de débit (3) que les organes d'étanchéité (6) ; et **en ce qu'**au moins un de l'au moins un élément de support (8) est allongé et s'étend le long d'un côté latéral ou le long des deux côtés latéraux d'une fente de guidage de tige (29) de la moitié de logement de vanne associée (20a, 20b).

2. Vanne à opercule (1) selon la revendication 1, dans laquelle, lorsqu'aucune pression de fluide n'agit sur une des surfaces majeures (41) de la plaque d'opercule (4), il y a un écart d'espacement entre la plaque d'opercule (4) et la partie saillante (7).

3. Vanne à opercule (1) selon la revendication 1 ou 2, dans laquelle, lorsqu'une pression de fluide agit sur la plaque d'opercule (4), une des deux surfaces majeures (41) de la plaque d'opercule (4) est contiguë à la partie saillante (7).

4. Vanne à opercule (1) selon l'une quelconque des revendications précédentes, dans laquelle, lorsqu'une pression de fluide agit sur la plaque d'opercule (4), la partie saillante (7) est positionnée contre un des organes d'étanchéité (6) pour que la partie saillante (7) retienne l'organe d'étanchéité (6).

5. Vanne à opercule (1) selon l'une quelconque des revendications précédentes, dans laquelle une fente (55) s'étend depuis l'ouverture de débit (3) et à travers la partie saillante (7) et dans la rainure d'étanchéité (5).

6. Vanne à opercule (1) selon l'une quelconque des revendications précédentes, dans laquelle la partie saillante (7) est d'un matériau avec un module de Young de plus de 0,1 GPA.

7. Vanne à opercule (1) selon l'une quelconque des revendications précédentes, dans laquelle la partie saillante (7) a une hauteur s'étendant sensiblement en parallèle à une des surfaces majeures (41) de la plaque d'opercule (4) lorsque la plaque d'opercule (4) est dans la position fermée, et une largeur s'étendant sensiblement perpendiculairement à une des surfaces majeures (41) de la plaque d'opercule (4) lorsque la plaque d'opercule (4) est dans la position fermée, dans laquelle la partie saillante (7) a un rapport largeur-hauteur de 1 : 0,5-1,5.

8. Vanne à opercule (1) selon l'une quelconque des revendications précédentes, dans laquelle les deux surfaces opposées (51) de la rainure d'étanchéité (5) s'étendent sensiblement en parallèle aux deux surfaces majeures (21, 22) du logement de vanne (2).

9. Vanne à opercule (1) selon l'une quelconque des revendications précédentes, dans laquelle les organes d'étanchéité (6) et/ou partie(s) saillante(s) (7) s'étendent sensiblement autour de l'ouverture de débit (3), ou d'au moins une moitié inférieure de cette dernière.

10. Vanne à opercule (1) selon l'une quelconque des revendications précédentes, dans laquelle au moins un dudit au moins un élément de support (8) est prévu sur chaque côté de la plaque d'opercule (4).

11. Vanne à opercule (1) selon l'une quelconque des revendications précédentes, dans laquelle au moins deux dudit au moins un élément de support (8) sont prévus sur chaque côté de la plaque d'opercule (4).

12. Vanne à opercule (1) selon l'une quelconque des revendications précédentes, dans laquelle l'au moins un élément de support (8) est prévu en fraisant l'élément de support (8) dans une ou chacune des deux parties de logement de vanne (20a, 20b).

13. Procédé pour commander un débit de fluide à travers une vanne à opercule (1), la vanne à opercule (1) comprenant :
un logement de vanne en forme de plaque (2) comprenant deux moitiés de logement de vanne en forme de plaque (20a, 20b), le logement de vanne (2) circonscrivant une ouverture de débit (3) s'étendant entre deux surfaces majeures (21, 22) du logement de vanne (2) ;
un premier tuyau (11) raccordé à une première des deux surfaces majeures (21, 22) pour circonscrire l'ouverture de débit (3) sur la première surface majeure et un second tuyau (12) raccordé à une seconde des deux surfaces majeures (21, 22) pour circonscrire l'ouverture de débit (3) sur la seconde surface majeure ; et
une plaque d'opercule (4) pouvant coulisser à l'intérieur du logement de vanne (2) entre une position fermée, dans laquelle la plaque d'opercule (4) bloque l'ouverture de débit (3), et une position ouverte, qui permet un débit de fluide à travers l'ouverture de débit (3) ;
dans laquelle le logement de vanne (2) comprend une rainure d'étanchéité circonférentielle (5), la rainure d'étanchéité (5) circonscrivant au moins partiellement l'ouverture de débit (3), la plaque d'opercule (4) coulissant dans la rainure d'étanchéité (5) lorsqu'elle coulisse entre la position ouverte et la position fermée, la rainure d'étanchéité (5) comprenant deux surfaces opposées (51), deux organes d'étanchéité circonférentiels opposés (6) chacun s'étendant depuis une des deux surfaces opposées (51) pour être contigu à une associée de deux surfaces majeures (41) de la plaque d'opercule (4) pour étanchéifier l'ouverture de débit (3) au moins dans la position fermée ; et
dans laquelle une partie saillante (7) s'étend depuis une des deux surfaces opposées (51) de la rainure d'étanchéité (5) vers l'autre des deux surfaces opposées (51) de la rainure d'étanchéité (5) ;
dans lequel la partie saillante (7) est d'un matériau plus rigide qu'un matériau d'étanchéité des organes d'étanchéité (6), ou, en variante, lorsqu'aucune pression de fluide n'agit sur une des surfaces majeures (41) de la plaque d'opercule (4), la partie saillante (7) ne se déforme pas si la plaque d'opercule (4) est contiguë à la partie saillante (7) ; et
dans lequel la partie saillante (7) est positionnée plus près de l'ouverture de débit que les organes d'étanchéité (6) ; et
au moins une des moitiés de logement de vanne (20a, 20b) dans une portion supérieure du logement de vanne (2) positionnée au-dessus de l'ouverture de débit (3) comprend au moins un élément de support (8) sur un ou les deux côtés de la plaque d'opercule (4) pour supporter la plaque d'opercule (4) lorsqu'une pression de fluide agit sur une des deux surfaces majeures (41) de la plaque d'opercule (4), dans lequel l'élément de support/les éléments de support (8) est/sont prévu(s) sous forme de saillies qui font saillie vers la moitié de logement de vanne opposée (20a, 20b), dans lequel au moins un de l'au moins un élément de support (8) est allongé et s'étend le long d'un côté latéral ou le long des deux côtés latéraux d'une fente de guidage de tige (29) de la moitié de logement de vanne associée (20a, 20b),
dans lequel le procédé comprend l'étape de la fourniture de fluide à travers la vanne à opercule de telle sorte que, lors du coulissement de la plaque d'opercule (4) vers la position ouverte, lorsqu'une pression de fluide agit sur une des deux surfaces majeures (41) de la plaque d'opercule (4), l'autre des deux surfaces majeures (41) de la plaque d'opercule (4) soit contiguë à la partie saillante (7) et la partie saillante (7) soit positionnée contre un des organes d'étanchéité (6).
